# DEMANDE DE BREVET EUROPEEN

(11) **EP 1 143 732 A1**
(43) Date de publication de la demande: **10.10.2001**
(21) Numéro de dépôt: 01400321.4
(22) Date de dépôt: 08.02.2001
(51) Int. Cl.: H04N 7/173, H04N 5/765

(54) **Dispositif de réception et de restitution de séquences audio et vidéo**

(30) Priorité: 03.04.2000 FR 0004240
(71) Demandeur: SAGEM S.A., 75116 Paris (FR)
(72) Inventeur: Meulle, Philippe, 78300 Poissy (FR)
(74) Mandataire: Schmit, Christian Norbert Marie

(57) **Abrégé**

L'invention concerne un dispositif (100) de réception et de restitution de séquences constituées de signaux audio et/ou vidéo pouvant recevoir les signaux audio et vidéo depuis différentes sources extérieures (108; 111; 113) comprenant notamment :
- des moyens de mémorisation (110 ; 140 ; 141) des différentes séquences reçues ;
- des moyens de sélection et d'agencement (120 ; 142) des différentes séquences mémorisées pour composer des programmes personnels ;
- des moyens de restitution (123 ; 144) du programme personnel composé sur un ou plusieurs organes de sortie du dispositif (100);
- des moyens de mémorisation (110 ; 143) des différents programmes personnels composés.

## Description

La présente invention se rapporte à un dispositif de réception et de restitution de séquences constituées de signaux audio et/ou vidéo, ledit dispositif pouvant recevoir les signaux audio et vidéo depuis différentes sources extérieures. Elle permet à un utilisateur du dispositif de créer des compositions, des programmes personnels à partir de séquences audio et vidéo reçues depuis les différentes sources extérieures connectées au dispositif.

D'une façon générale, le domaine de l'invention est celui de la télévision numérique. L'invention s'inscrit dans le cadre général du développement des services offerts par des dispositifs du type téléviseurs susceptibles de se connecter à différentes sources d'information audio et vidéo externes. Elle a pour but d'offrir la possibilité aux utilisateurs de sélectionner et d'agencer de façon simple et selon leur volonté différentes séquences reçues par le dispositif à différents instants.

Un dispositif de réception de signaux audio et/ou vidéo du type téléviseur peut aujourd'hui être connecté à différentes sources d'informations externes. Il est tout d'abord possible de recevoir un flux d'informations émis par les opérateurs de télévision. Depuis les appareils de lecture de supports audio et/ou vidéo du type magnétoscope ou lecteur de vidéodisque, un utilisateur peut également accéder à des séquences vidéo et audio préalablement enregistrées par lui-même ou par un tiers. Des dispositifs du type appareil photo numérique peuvent également être connectés au moyen d'un bus USB (Universal Serial Bus dans la littérature anglaise) au téléviseur numérique afin d'afficher sur l'écran de télévision les photos qui ont été préalablement prises avec ces dispositifs.

Un utilisateur peut effectuer de façon connue au moyen de dispositifs d'enregistrement externes connectés à la télévision une juxtaposition de séquences qui proviennent le plus souvent d'une source externe unique. Il peut ainsi réaliser une composition personnelle de séquences audio et vidéo. Il n'existe cependant pas à ce jour de moyens simples pour réaliser une juxtaposition ou une superposition de signaux audio et vidéo qui arrivent dans la télévision numérique depuis des sources externes différentes.

Le dispositif selon l'invention répond à ce besoin. A cet effet, l'invention met en oeuvre des moyens pour mémoriser, au sein d'une télévision numérique ou d'un dispositif du type décodeur qui lui est raccordé, des séquences audio et/ou vidéo issues de diverses sources externes. Des moyens pour sélectionner, dans un ordre choisi par l'utilisateur, les séquences ainsi mémorisées sont également proposés dans l'invention. Une fois sélectionnées, les séquences peuvent alors être juxtaposées, ou même superposées lorsqu'il s'agit d'une séquence audio et d'une séquence vidéo. Cette juxtaposition et/ou superposition de séquences constitue alors un programme personnel de l'utilisateur. Ce programme personnel est mémorisé à son tour dans un module de mémoire du dispositif selon l'invention.

Dans un mode de réalisation préféré de l'invention, lorsqu'une séquence contenant des informations audio et vidéo est mémorisée conformément aux instructions de l'utilisateur, les informations relatives au signal audio et au signal vidéo sont dissociées et mémorisées sous forme de séquences distinctes, tout en conservant cependant une information précisant que cette séquence audio et cette séquence vidéo était initialement combinées. Selon l'invention, une application de capture d'une image vidéo affichée sur l'écran de télévision peut être utilisée; une image capturée constitue alors une séquence qui peut également intervenir dans la composition d'un programme personnel. Afin de faciliter l'élaboration des programmes personnels, les opérations de mémorisation et de sélection des différentes séquences peuvent être effectuées au moyen d'une télécommande, qui peut être celle de la télévision, et à l'aide d'un menu affichable sur l'écran de télévision sous forme de fenêtre graphique incrustée sur l'écran de télévision.

L'invention concerne donc un dispositif de réception et de restitution de séquences constituées de signaux audio et/ou vidéo pouvant recevoir les signaux audio et vidéo depuis différentes sources extérieures, notamment un opérateur de télévision et/ou un appareil de lecture de supports audio et/ou vidéo, et/ou un appareil photographique numérique, caractérisé en ce qu'il comprend :
- des moyens de mémorisation des différentes séquences reçues ;
- des moyens de sélection et d'agencement des différentes séquences mémorisées pour composer des programmes personnels ;
- des moyens de restitution du programme personnel composé sur un ou plusieurs organes de sortie du dispositif ;
- des moyens de mémorisation des différents programmes personnels composés.

En outre, les moyens de sélection et d'agencement permettent la mémorisation d'un ensemble de données relatives à des adresses mémoires des différentes séquences qui vont composer un programme personnel.

Par ailleurs, des moyens d'affichage d'un menu pour effectuer la sélection et l'agencement des différentes séquences mémorisées sont proposés. Dans un mode de réalisation préféré de l'invention, des moyens pour dissocier des signaux vidéo et des signaux audio d'une séquence reçue, et des moyens pour mémoriser séparément les signaux vidéo et les signaux audio ainsi dissociés sont proposés. Dans ce cas de figure, le dispositif selon l'invention met en oeuvre des moyens pour mémoriser une origine commune des signaux audio et vidéo mémorisés. Enfin, dans un mode de réalisation particulier de l'invention, des moyens pour effectuer de façon aléatoire l'agencement des différentes séquences sélectionnées sont proposées.

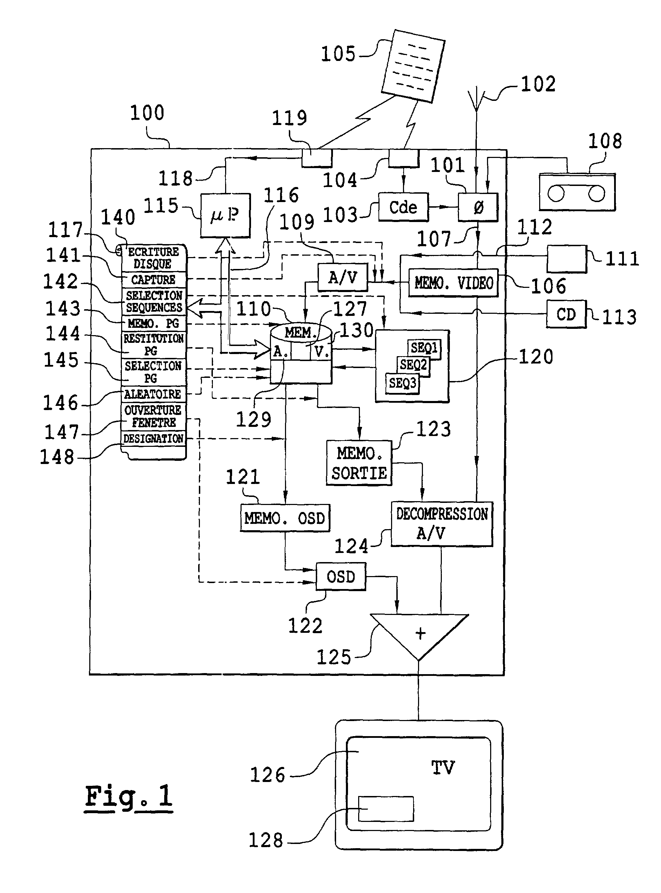

L'invention et ses différentes applications seront mieux comprises à la lecture de la description qui suit et à l'examen de la figure qui l'accompagne. Celle ci n'est présentée qu'à titre indicatif et nullement limitatif de l'invention. La figure 1 unique montre une structure simplifiée du dispositif selon l'invention.

La figure 1 montre un dispositif 100 selon l'invention. Dans l'exemple illustré, le dispositif est une télévision numérique. Il est cependant évident que les différents éléments essentiels du dispositif selon l'invention peuvent être disposés dans un module connecté à la télévision, par exemple dans un décodeur.

Le dispositif 100 comporte un module de réception 101 de signaux télévisuels qui reçoit via une antenne 102 un flux d'informations de programmes de télévision. Le module de réception 101 pourrait également être connecté à un réseau de télévision câblé ou à un système de réception par satellite. Par ailleurs, le module de réception 101 est connecté à un circuit de commande 103 du module de réception 101. Le circuit de commande 103 indique au module de réception 101 quel programme de télévision il doit extraire du flux d'informations qu'il reçoit par l'antenne 102. Un premier capteur 104, clans cet exemple infrarouge, reçoit les signaux émis par une télécommande 105. Une cellule infrarouge du premier capteur 104 délivre un signal qui permet à l'utilisateur de contrôler le circuit 103. Les signaux numérique issus du module de réception 101 sont envoyés vers une mémoire vidéo 106 via une liaison unidirectionnelle 107. Le plus souvent, la mémoire vidéo 106 peut contenir les données codant deux ou trois images qui vont être diffusées. Le module de réception 101 est également susceptible de recevoir des signaux audio et vidéo émis depuis une première source externe constituée par des lecteurs 108 de supports d'enregistrement audio et vidéo de type magnétoscope ou lecteur de vidéodisques. Un circuit électronique 109, dit séparateur audio/vidéo, a pour fonction de dissocier les signaux audio et vidéo ; il est disposé entre une unité de mémoire de type disque dur 110 et la mémoire vidéo 106. Une première zone 129 du disque dur 110 est réservée aux signaux audio, et une deuxième zone 130 du disque dur 110 est réservée aux signaux vidéo.

Une deuxième source externe de signaux vidéo est constituée par un appareil photo numérique 111. Une liaison de type bus USB 112 assure la connexion entre le séparateur audio/vidéo 109 et la mémoire vidéo 106. Une troisième source externe constituée par exemple par un lecteur de disques numériques audio 113 est également connectée entre le séparateur audio/vidéo 109 et la mémoire vidéo 106.

Un microprocesseur 115 est relié au moyen d'un bus de communication bidirectionnel 116 à une mémoire de programmes 117. Le microprocesseur 115 gère l'ensemble des opérations intervenant suite à une mise en oeuvre d'une ou plusieurs applications de la mémoire de programmes 117. Les applications de la mémoire de programmes 117 peuvent cependant être remplacées par des circuits électroniques spécialisés dont les fonctionnements sont toujours gérés par le microprocesseur 115. Le bus de communication bidirectionnel 116 véhicule des signaux de commande, d'adresse ou de données entre les différentes mémoires et les différents circuits électronique du dispositif 100. Par soucis de clarté et de simplification de la figure, l'ensemble des ramifications du bus bidirectionnel ne sont pas représentées, mais sont remplacées sur la figure par des liaisons qui mettent en évidence les échanges de données nécessaires dans l'invention. Le microprocesseur 115 est par ailleurs relié au moyen d'une liaison unidirectionnelle 118 à un deuxième capteur 119 qui est de préférence semblable au premier capteur 104. Les deux capteurs 119 et 104 peuvent recevoir des signaux de la même télécommande 105. Dans une variante de l'invention, les deux capteurs 119 et 104 peuvent être confondus.

Le disque dur 110 est connecté d'une part à un module de sélection et d'agencement 120 de séquences audio et vidéo, et d'autre part à une mémoire d'incrustations ou d'OSD (On Screen display dans la littérature anglaise) 121. Un module d'incrustation d'images 122 ou unité d'OSD est connecté à la mémoire d'OSD 121. Par ailleurs, le disque dur 110 est connecté à une mémoire de sortie 123, elle-même connectée à un module de décompression de signaux audio et vidéo 124, qui reçoit également en entrée les signaux issus de la mémoire vidéo 106. Dans un mode de réalisation particulier de l'invention, la mémoire de sortie 123 peut être confondue avec la mémoire vidéo 106.

Un module de superposition 125 admet à une première entrée les signaux issus du module d'incrustation d'images 122, et à une deuxième entrée les signaux issus du module de décompression 124 des signaux audio et vidéo. Les signaux issus du module de superposition 125 sont alors transmis vers un écran de télévision 126.

Le fonctionnement de l'appareil de télévision selon l'invention est à présent expliqué.

Les signaux audio et vidéo provenant de l'antenne 102 ou du dispositif de type magnétoscope ou lecteur de vidéodisques 108 parviennent dans le module de réception 101 de la télévision 100 avant d'être transmis à la mémoire vidéo 106. Lorsqu'un utilisateur du dispositif selon l'invention souhaite mémoriser une séquence, il déclenche au moyen de la télécommande 105, qui émet un signal infrarouge vers le deuxième capteur 119, une application 140, dite d'écriture disque, de la mémoire de programmes 117. Cette application a pour effet de transmettre les données qui arrivent dans la mémoire vidéo 106 vers le disque dur 110 via le séparateur audio/vidéo 109.

Dans un mode de mise en oeuvre particulier de l'invention, une première pression sur une touche prédéfinie de la télécommande 105 déclenche l'application d'écriture disque 140, et une deuxième pression sur la même touche ou sur une touche différente de la télécommande 105 marque l'arrêt de l'application d'écriture disque 140. Dans un autre mode de réalisation de l'invention, l'application d'écriture disque 140 peut être déclenchée automatiquement afin de mémoriser sur le disque dur 110 une séquence reçue par le module de réception 101 et dont la mémorisation avait fait l'objet d'une programmation préalable par exemple au sein du magnétoscope 108.

L'application d'écriture disque 140 peut également être déclenchée lorsque l'appareil de photographie numérique 111 ou le lecteur de disques numériques 113 sont connectés à la télévision 100 et sont susceptibles d'envoyer des séquences audio et/ou vidéo.

Le séparateur audio/vidéo 109 permet de dissocier les signaux audio et les signaux vidéo qui vont être écrits sur le disque dur 110. Ainsi, à partir d'une séquence audio et vidéo que l'utilisateur souhaite mémoriser, la séquence audio et la séquence vidéo sont accessibles séparément pour composer un programme personnel. A cet effet, les séquences audio et les séquences vidéo peuvent être mémorisées dans des parties distinctes du disque dur 110. Le disque dur 110 peut également comporter une zone réservée, dite zone de correspondance 127, qui permet de conserver une information indiquant qu'une séquence audio et une séquence vidéo qui ont été dissociées étaient initialement associées.

Une application de capture 141 de la mémoire de programmes 117, qui peut elle aussi être déclenchée au moyen de la télécommande 105, permet également de recopier sur le disque dur 110 les données relatives à une image vidéo présente sur l'écran de télévision 126 au moment du déclenchement de l'application. Le dispositif selon l'invention comprend ainsi des moyens pour capturer instantanément une image visible sur un moyen d'affichage du dispositif, et pour mémoriser cette image de façon à ce qu'elle soit accessible pour la composition de programmes personnels.

Les séquences audio ou vidéo mémorisées dans le disque dur 110 sont ordonnées, par exemple selon l'ordre chronologique de leur mémorisation. L'utilisateur a la possibilité d'associer un intitulé à chaque séquence qu'il a enregistrée. Une application, dite de désignation, 148 de la mémoire de programmes 117 est prévue à cet effet. La désignation de la séquence est mémorisée dans le disque dur 110 avec la séquence à laquelle elle est associée. L'ensemble des séquences disponibles sur le disque dur 110 peut ensuite être consulté dans une fenêtre graphique 128 qui peut être incrustée sur l'écran de télévision 126 au moyen du module d'OSD 122. La fenêtre graphique 128 peut être affichée suite à la mise en oeuvre d'une application, dite d'ouverture de fenêtre graphique, 147 suite à une action de l'utilisateur sur la télécommande 105. A cet effet, une mise à jour automatique de la mémoire d'OSD 121 est mise en oeuvre dans l'invention. Ainsi, à chaque nouvelle séquence audio ou vidéo mémorisée dans le disque dur 110, une information relative à la mémorisation d'une nouvelle séquence est transmise à la mémoire d'OSD 121 avec l'intitulé de cette séquence.

A partir de l'ensemble des séquences mémorisées dans le disque dur 110, l'utilisateur du dispositif selon l'invention peut constituer un ou plusieurs programmes personnels en agençant différentes séquences les unes à la suite des autres, et éventuellement en superposant des séquences audio et des séquences vidéo. Lorsque l'ensemble des séquences disponibles dans le disque dur 110 sont affichées sur l'écran de télévision 126, l'utilisateur peut au moyen de la télécommande 105 sélectionner un ensemble de séquences et réaliser ensuite l'agencement particulier de ces séquences.

Pendant la constitution d'un programme personnel, l'ensemble des données relatives aux séquences qui vont être insérées dans le programme personnel, ou un ensemble de données relatives aux adresses mémoire de ces séquences, sont temporairement mémorisées dans le module de sélection et d'agencement 120. Une application de sélection de séquence 142 de la mémoire de programme 117 est mise en oeuvre à cet effet. Lorsque la séquence sélectionnée est une image capturée à l'aide de l'application de capture 141, l'utilisateur a la possibilité de déterminer un temps d'apparition de cette image dans le programme personnel qu'il compose. L'application de sélection de séquence 142 est souple d'utilisation dans le sens où l'utilisateur peut tout d'abord sélectionner un ensemble de séquences pour constituer un programme personnel, et effectuer l'agencement de ces séquences ultérieurement. Cette application peut en outre permettre d'associer des signaux audio d'une première séquence et les signaux vidéo d'une deuxième séquence, la première séquence et la deuxième séquence ayant été mémorisées à des instants différents.

Une fois que le programme personnel est achevé, une application de mémorisation 143 du programme personnel est mise en oeuvre pour mémoriser dans le disque dur 110 un ensemble de données qui permettront de restituer sur des organes de sortie du dispositif 100 les séquences sélectionnées dans le programme personnel avec l'agencement qui à été défini. Pour cette restitution, une application de restitution de programme personnel 144 de la mémoire de programmes 117 est mise en oeuvre.

Lorsqu'un utilisateur souhaite visionner un des programmes personnels qu'il a établi, une application de sélection du programme personnel 146 de la mémoire du programmes 117, commandé par le microprocesseur 115, peut être mise en oeuvre à l'aide de la télécommande 105. Cette application permet de sélectionner un programme personnel parmi les différents programmes personnels qui ont pu être préalablement composés. Les différentes séquences du programme personnel transitent alors par la mémoire de sortie 123 avant d'arriver dans le module de décompression audio vidéo 124. Ils sont alors diffusés sur l'écran de télévision 126 accompagnées des séquences audio associées.

Une application dite d'agencement aléatoire 146 de la mémoire de programmes 117 peut également être mise en oeuvre à la demande de l'utilisateur. Cette application a pour effet de juxtaposer de façon aléatoire plusieurs séquences audio et vidéo qui ont été mémorisées dans le disque dur 110.

## Revendications

1. Dispositif (100) de réception et de restitution de séquences constituées de signaux audio et/ou vidéo pouvant recevoir les signaux audio et vidéo depuis différentes sources extérieures, notamment un opérateur de télévision et/ou un appareil de lecture de supports audio et/ou vidéo (108 ; 113), et/ou un appareil photographique numérique (111), **caractérisé en ce qu'**il comprend :
- des moyens de mémorisation (110 ; 140) des différentes séquences reçues ;
- des moyens de sélection et d'agencement (120 ; 142) des différentes séquences mémorisées pour composer des programmes personnels ;
- des moyens de restitution (123 ; 144) du programme personnel composé sur un ou plusieurs organes de sortie du dispositif (100);
- des moyens de mémorisation (110 ; 143) des différents programmes personnels composés.

2. Dispositif (100) selon la revendication 1 **caractérisé en ce que** les moyens de sélection et d'agencement (120 ;142) permettent la mémorisation d'un ensemble de données relatives à des adresses mémoires des différentes séquences qui vont composer un programme personnel.

3. Dispositif (100) selon l'une des revendications 1 ou 2 **caractérisé en ce qu'**il comprend des moyens d'affichage (147) d'un menu pour effectuer la sélection et l'agencement des différentes séquences mémorisées.

4. Dispositif (100) selon une des revendications précédentes **caractérisé en ce qu'**il comprend une télécommande (105) pour effectuer la sélection et l'agencement des différentes séquences mémorisées.

5. Dispositif (100) selon une des revendications précédentes **caractérisé en ce qu'**il comprend des moyens (109) pour dissocier les signaux vidéo et les signaux audio d'une séquence reçue, des moyens (129; 130) pour mémoriser séparément les signaux vidéo et les signaux audio, et des moyens (127) pour mémoriser l'origine commune des signaux audio et vidéo ainsi mémorisés.

6. Dispositif (100) selon une des revendications précédentes **caractérisé en ce qu'**il comprend des moyens pour associer des signaux audio d'une première séquence et les signaux vidéo d'une deuxième séquence, la première séquence et la deuxième séquence ayant été mémorisées à des instants différents.

7. Dispositif (100) selon une des revendications précédentes **caractérisé en ce qu'**il comprend des moyens (141) pour capturer instantanément une image visible sur un moyen d'affichage (126) du dispositif (100), et pour mémoriser cette image de façon à ce qu'elle soit accessible pour la composition de programmes personnels.

8. Dispositif (100) selon la revendication 7 **caractérisé en ce qu'**il comprend des moyens pour déterminer un temps d'apparition, dans les programmes personnels, d'une image capturée.

9. Dispositif (100) selon une des revendications précédentes **caractérisé en ce qu'**il comprend des moyens pour effectuer de façon aléatoire l'agencement de différentes séquences sélectionnées.
